# EUROPÄISCHE PATENTSCHRIFT

(11) **EP 1 471 109 B1**
(45) Veröffentlichungstag und Bekanntmachung des Hinweises auf die Patenterteilung: **15.08.2012**
(21) Anmeldenummer: 04006347.1
(22) Anmeldetag: 17.03.2004
(51) Int. Cl.: C08K 5/00, C08G 18/00

(54) **Mittel, enthaltend Oxalsäuredialkylester und sterisch gehindertes Carbodiimid**
Composition containing an oxalic acid dialkyl ester and a sterically hindered carbodiimide
Composition contenant un ester dialcoylique de l'acide oxalique et un carbodiimide à empêchement stérique

(30) Priorität: 22.04.2003 DE 10318282
(43) Veröffentlichungstag der Anmeldung: 27.10.2004
(73) Patentinhaber: BASF SE, 67056 Ludwigshafen (DE)
(72) Erfinder: Schütte, Markus, Dr., 49074 Osnabrück (DE); Kreyenschmidt, Martin, Dr., 49393 Lohne (DE); Häberle, Karl, Dr., 67346 Speyer (DE)

(56) Entgegenhaltungen:
- EP-A- 0 032 011
- EP-A- 0 628 541
- DE-A- 4 238 046
- DE-A- 10 063 497

## Beschreibung

Die Erfindung betrifft ein
Estergruppen aufweisendes Polykondensationsprodukt, enthaltend ein Mittel, das
a) Oxalsäuredialkylester, wobei der Alkylrest 1 bis 10 Kohlenstoffatome aufweist, und
b) ein Carbodiimid der allgemeinen Formel

   Z-N=C=N-Z

   aufweist,
   wobei Z eine tert.-Butylgruppe, eine lsopropylgruppe oder mit tert.-Butylgruppen, Isopropylgruppen substituierte Arylgruppe darstellt.

Es ist allgemein bekannt, dass Polyurethane auf Basis von Polyesterpolyolen der hydrolytischen Alterung unterworfen sind. So beschreibt DE-A-100 63 497 die Verwendung von Estern von ein- oder mehrbasigen Carbonsäuren, deren erste Dissoziation einen pKs- Wert von 0,5 bis 4 aufweist als Hydrolyseschutz für Polyester-Polyurethane. In DE-A-198 38 167 wird für den gleichen Zweck der Einsatz von Säureanhydriden offenbart. DE-A-42 38 046 beschreibt Stabilisatoren auf Basis von 4,4'-disubstituierten Bis-(2,6-diisopropyl-phenyl)-carbodiimiden und DE-A-43 18 979 monomere oder oligomere Carbodiimide mit endständigen Isocyanat-, Harnstofrf- und/oder Urethangruppen.

Aufgabe der Erfindung war es, ein Estergruppen aufweisendes Polykondensationsprodukt, enthaltend ein Mittel, bereit zu stellen, welches vorteilhaft für die Stabilisierung von Estergruppen aufweisenden Polyurethanen verwendet werden kann.

Die Aufgabe konnte dadurch gelöst werden, dass aus der Vielzahl der im Stand der Technik bekannten Verbindungen, die zum Hydrolyseschutz verwendet werden, ein spezielles Mittel ausgewählt wurde, welches unerwartet gute Eigenschaften bezüglich der Stabilisierung von Estergruppen enthaltenden Polyurethanen aufweist.

Gegenstand der Erfindung ist daher ein
Estergruppen aufweisendes Polykondensationsprodukt, enthaltend ein Mittel, das
a) Oxalsäuredialkylester, wobei der Alkylrest 1 bis 10 Kohlenstoffatome aufweist, und
b) ein Carbodiimid der allgemeinen Formel

   Z-N=C=N-Z

   aufweist,
   wobei Z eine tert.-Butylgruppe, eine lsopropylgruppe oder mit tert.-Butylgruppen, Isopropylgruppen substituierte Arylgruppe darstellt.

Die Komponente (a) des erfindungsgemäßen Mittels enthält Oxalsäuredialkylester, wobei der Alkylrest 1 bis 10 Kohlenstoffatome aufweist. Beispiele für geeignete Alkylreste sind ein Methyl-, Ethyl-, n-Propyl-, Iso-Propyl-, n-Butyl-, Iso-Butyl und ein Pentylrest, sowie Gemische daraus. Bevorzugt wird als Alkylrest ein Methyl- oder Ethylrest verwendet, besonders bevorzugt wird als Alkylrest ein Ethylrest verwendet, d.h. besonders bevorzugt wird Diethyloxalat als Komponente (a) verwendet.

Die Komponente (b) des erfindungsgemäßen Mittels enthält ein sterisch gehindertes Carbodiimid. Unter sterisch gehinderten Carbodiimide sind Verbindungen der allgemeinen Formel

Z-N=C=N-Z zu verstehen,

wobei Z eine sterisch anspruchsvolle Gruppe darstellt. Sterisch anspruchsvolle Gruppen sind tert.-Butylgruppen, Isopropylgruppen und mit sterisch anspruchsvollen Gruppen substituierte Arylgruppen.

Es hat sich als vorteilhaft erwiesen, wenn als sterisch anspruchsvolle Gruppe eine Phenylgruppe verwendet wird, die durch 2,6-ständige Substituenten substituiert ist, wobei es sich bei den Substituenten wiederum um sterisch anspruchsvolle Gruppen, wie beispielsweise tert.-Butylgruppen oder bevorzugt Isopropylgruppen handelt.

In einer bevorzugten Ausführungsform wird als sterisch gehindertes Carbodiimid (b) eine Verbindung gemäß der allgemeinen Formel (1) verwendet, 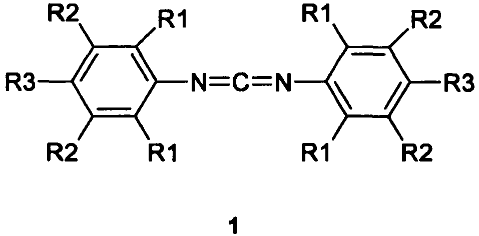 in der R1 eine Isopropyl- oder Isobutylgruppe oder ein Gemisch daraus darstellt und R2 bis R3 ein Wasserstoffatom oder einen organischen Rest darstellt.

In Formel 1 ist R2 bevorzugt ein Wasserstoffatom.
In Formel 1 ist R3 bevorzugt ein Wasserstoffatom oder ein 1-Methyl-1-Phenyl-ethyl-, ein Phenoxy- oder ein tert.-Butylrest.
Besonders bevorzugt ist in Formel 1 R1 ein Isopropylrest.

In einer bevorzugten Ausführungsform wird als sterisch gehindertes Carbodiimid (b) eine Verbindung gemäß der allgemeinen Formel (2) verwendet,

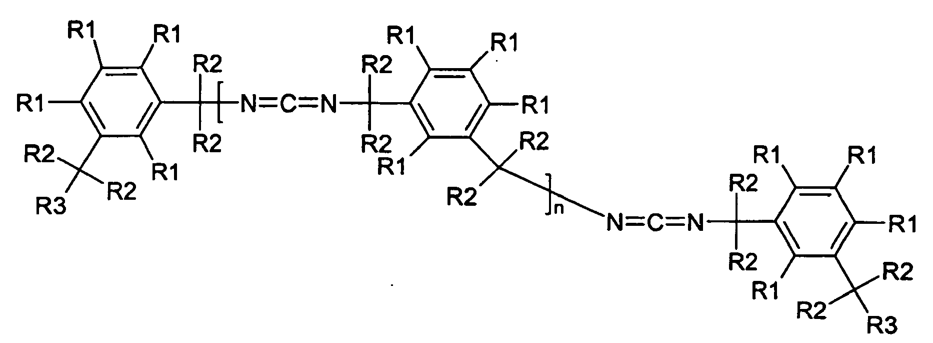

in der R1 gleich oder verschieden ist und einen organischer Rest, bevorzugt ein Wasserstoffatom bedeutet,
R2 gleich oder verschieden ist und einen Alkylrest, bevorzugt eine Methylgruppe bedeutet, und
R3 gleich oder verschieden und ein Wasserstoffatom, ein Alkylrest oder ausgewählt aus der Gruppe der-NCO, -NHCONHR⁴, -NHCONR⁴R⁵ und -NHCOOR⁶-Reste ist, wobei R⁴ und R⁵ gleich oder verschieden sind und einen Alkyl- Cycloalkyl- oder Aralkylrest bedeuten und R⁶ gleich R⁴ oder ein Alkoxypolyoxalkylenrest ist und n eine ganze Zahl von 0 bis 10 ist.

Handelsübliche Uretonimin- oder Carbodiimidmodifizierten Polyisocyanate, wie sie beispielweise unter den Handelsnamen Lupranat® MM103 erhältlich sind, fallen im Rahmen dieser Erfindung nicht unter den Begriff sterisch gehindertes Carbodiimid.

Die Anteile der Komponenten (a) und (b) im erfindungsgemäßen Mittel sind im allgemeinen nicht beschränkt und variieren je nach Art der Anwendung. In einer bevorzugten Ausführungsform enthält das erfindungsgemäße Mittel Oxalsäuredialkylester (a) in einer Menge von 2 bis 80 Gew.-%, mehr bevorzugt 5 bis 70 Gew.-%, besonders bevorzugt 20 bis 65 Gew.-% und das sterisch gehinderte Carbodiimid (b) in einer Menge von 20 bis 98 Gew.-%, mehr bevorzugt 30 bis 95 Gew.-%, besonders bevorzugt 35 bis 80 Gew.-%, bezogen auf das Gesamtgewicht des Mittels.

Das erfindungsgemäße Mittel wird zur Herstellung von Estergruppen aufweisenden Polykondensationsprodukten, bevorzugt zur Herstellung von Estergruppen aufweisenden Polyisocyanat-Polyadditionsprodukten, insbesondere von Estergruppen aufweisenden Polyurethanen verwendet. Beispiele für vorstehend genannte Polykondensationsprodukte sind Polyester, Polyetherester, Polyesteramide, Polycaprolactone, Polyurethane, Polyharnstoffe und Polyurethan-Polyharnstoffelastomere.

Das erfindungsgemäße Mittel ist im allgemeinen zur Stabilisierung von allen Estergruppen aufweisenden Polyurethanen geeignet, beispielsweise PUR-Weichschaumstoffe, PUR-Halbhartschaumstoffe, PUR-Hartschaumstoffe, PUR-Integralschaumstoffe, kompaktes PUR, thermoplastisches PUR (TPU) und PUR-Harnstoffelastomere.

Bevorzugt wird das erfindungsgemäße Mittel zur Verbesserung der Hydrolysestabilität von Polykondensationsprodukten, insbesondere Polyurethanen mit zelligem Kern und kompakter Oberfläche und einer Dichte von 150 bis 750 g/l, bevorzugt von 350 bis 700 g/l, verwendet und zur Verbesserung der Hydrolysestabilität von Schuhsohlen, enthaltend diese Polyurethane.

Die erfindungsgemäßen Polykondensationsprodukte enthalten im allgemeinen das erfindungsgemäße Mittel in einer Menge von 0,1 bis 15 Gew.-%, bevorzugt von 0,25 bis 10 Gew.-%, bezogen auf das Gesamtgewicht des Kondensationsprodukts. Bevorzugt enthält das Polykondensationsprodukt den Oxalsäuredialkylester (a) in einer Menge von 0,01 bis 5 Gew.-%, besonders bevorzugt 0,05 bis 1 Gew.-% und das sterisch gehindertes Carbodiimid (b) in einer Menge von 0,01 bis 30 Gew.-%, besonders bevorzugt von 0,1 bis 15 Gew.-%, bezogen auf das Gesamtgewicht des Polykondensationsprodukts, enthält.

In einer weiteren Ausführungsform handelt es sich bei dem erfindungsgemäßen Polykondensationsprodukt um ein Estergruppen aufweisendes
Polyurethan, insbesondere um ein thermoplastisches Polyurethan, wobei das thermoplastische Polyurethan bevorzugt Shorehärte von mindestens Shore 54 D aufweist.

In einer bevorzugten Ausführungsform handelt es sich bei dem erfindungsgemäßen Polykondensationsprodukt um ein Estergruppen aufweisendes Polyurethan, insbesondere in Form einer Schuhsohle, mit zelligem Kern und kompakter Oberfläche und einer Dichte von 150 bis 750 g/l. Dieser erfindungsgemäße Polyurethanintegralschaumstoff ist erhältlich durch Umsetzung von
i) Polyisocyanatprepolymeren mit einem NCO-Gehalt von 8 bis 25 %, erhalten durch Umsetzung von Polyisocyanaten (i-1) mit Polyolen (i-2), mit
ii) Polyolen,
wobei mindestens eine der Komponenten (i-2) oder (ii) Estergruppen aufweist, in Gegenwart des erfindungsgemäßen Mittels.

Bei den erfindungsgemäßen Polyurethanen mit zelligem Kern und kompakter Oberfläche (Polyurethanenintegralschaumstoffe) handelt es sich im allgemeinen um Integralschaumstoffe gemäß DIN 7726. In einer bevorzugten Ausführungsform betrifft die Erfindung Integralschaumstoffe auf Basis von Polyurethanen mit einer Shore Härte im Bereich von 20-90 A, bevorzugt von 30 bis 80 Shore A, gemessen nach DIN 53505. Weiterhin weisen die erfindungsgemäßen Integralschaumstoffe bevorzugt eine Zugfestigkeiten von 2 bis 20 N/mm², bevorzugt von 6 bis 18 N/mm², gemessen nach DIN 53504 auf. Ferner weisen die erfindungsgemäßen Integralschaumstoffe bevorzugt eine Dehnung von 100 bis 800 %, bevorzugt von 220 bis 700, gemessen nach DIN 53504 auf. Schließlich weisen die erfindungsgemäßen Integralschaumstoffe bevorzugt eine Weiterreißfestigkeit von 2 bis 45 N/mm, bevorzugt von 8 bis 38 N/mm, gemessen nach DIN 53507, auf. Die erfindungsgemäßen Polyurethane weisen außerdem bevorzugt eine Druckfestigkeit nach DIN 53421 von weniger als 80 kPa auf.

Bei den Komponenten (i) bzw. (i-1) und (i-2) sowie (ii) handelt es sich um in der Polyurethanchemie üblichen Einsatzstoffe, die beispielsweise beschrieben sind in Kunststoffhandbuch, Band 7, Polyurethane von Günter Oertel, 3. Auflage, 1993.

Die zur Herstellung der erfindungsgemäßen Polyurethanschaumstoffe verwendeten Polyisocyanate (i) umfassen die aus dem Stand der Technik bekannten aliphatischen, cycloaliphatischen und aromatischen Isocyanate sowie beliebige Mischungen daraus. Beispiele sind 4,4'-Diphenylmethandiisocyanat, die Mischungen aus monomeren Diphenylmethandiisocyanaten und höherkernigen Homologen des Diphenylmethandiisocyanats (Polymer-MDI), Tetramethylendiisocyanat, Hexamethylendiisocyanat (HDI), Toluylendiisocyanat TDI) oder Mischungen daraus.

Bevorzugt wird 4,4'-MDI und/oder HDI verwendet. Das besonders bevorzugt verwendete 4,4'-MDI kann geringe Mengen, bis etwa 10 Gew.-%, allophanat- oder uretoniminmodifizierte Polyisocyanate enthalten. Es können auch geringe Mengen Polyphenylenpolymethylenpolyisocyanat (Roh-MDI) eingesetzt werden. Die Gesamtmenge dieser hochfunktionellen Polyisocyanate sollte 5 Gew.-% des eingesetzten Isocyanates nicht überschreiten.

Die Polyisocyanate (i) können auch in Form von Polyisocyanatprepolymeren eingesetzt werden. Diese Prepolymere sind im Stand der Technik bekannt. Die Herstellung erfolgt auf an sich bekannte Weise, indem vorstehend beschriebene Polyisocyanate (i), beispielsweise bei Temperaturen von etwa 80°C, mit nachstehend beschriebenen Polyolen (ii) zum Prepolymer umgesetzt werden. Das Polyol-Polyisocyanat-Verhältnis wird im allgemeinen so gewählt, dass der NCO-Gehalt des Prepolymeren 8 bis 25 Gew.-%, vorzugsweise 10 bis 22 Gew.-%, besonders bevorzugt 13 bis 20 Gew.-% beträgt.

Als Polyole (ii) kommen insbesondere Polyetheralkohole und/oder Polyesteralkohole zum Einsatz.

Bevorzugt werden Polyesteralkohole verwendet. Diese werden zumeist durch Kondensation von mehrfunktionellen Alkoholen, vorzugsweise Diolen, mit 2 bis 12 Kohlenstoffatomen, vorzugsweise 2 bis 6 Kohlenstoffatomen, mit mehrfunktionellen Carbonsäuren mit 2 bis 12 Kohlenstoffatomen, beispielsweise Bernsteinsäure, Glutarsäure, Adipinsäure, u Phthalsäure, Isophthalsäure, und/oder Terephthalsäure hergestellt. Beispiele für geeignete zwei- und mehrwertige Alkohole sind Ethandiol, Diethylenglykol, 1,4-Butandiol, 1,5-Pentandiol, und/oder 1,6-Hexandiol.

Des weiteren können Polyetheralkohole als Komponente (ii) verwendet werden. Diese Polyetherpolyole werden im allgemeinen nach bekannten Verfahren, beispielsweise durch anionische Polymerisation mit Alkalihydroxiden als Katalysatoren und unter Zusatz mindestens eines Startermoleküls das 2 bis 4 reaktive Wasserstoffatome gebunden enthält, aus einem oder mehreren Alkylenoxiden, bevorzugt ausgewählt aus Propylenoxid (PO) und Ethylenoxid (EO), hergestellt. Ebenfalls können sie durch Alkoxylierung des oben genannten Startermoleküls mittels Doppelmetallcyanidkatalysatoren hergestellt werden.

Im allgemeinen weisen die eingesetzten Polyesterpolyole und/oder Polyetherpolyole eine mittlere theoretische Funktionalität von 2 bis 4, bevorzugt von mehr als 2 bis weniger als 3 auf. Des weiteren weisen im allgemeinen die eingesetzten Polyesterpolyole und/oder Polyetherpolyole eine mittlere OH-Zahl von 20 bis 200, bevorzugt von 30 bis 90 auf.

Der Umsetzung der Komponenten (i) und (ii) zu den erfindungsgemäßen Polyurethanen können als Komponente (iii) Kettenverlängerungsmittel zugegeben werden. Bevorzugt werden 2- und 3-funktionelle Alkohole mit Molekulargewichten unter 400 g/mol, insbesondere im Bereich von 60 bis 150 g/mol, als Kettenverlängerungsmittel verwendet. Beispiele sind Ethylenglykol, Propylenglykol, Diethylenglykol, Butandiol-1,4, Glycerin oder Trimethylolpropan. Bevorzugt wird Monoethylenglykol verwendet.

Das Kettenverlängerungsmittel wird üblicherweise in einer Menge von 3 bis 20 Gew.-%, bevorzugt von 6 bis 16 Gew.-%, besonders bevorzugt von 8 bis 14 Gew.-%, bezogen auf das Gesamtgewicht der Komponenten (ii) und (iii) verwendet.

Die Umsetzung der Komponenten (a) und (b) erfolgt gegebenenfalls in Gegenwart von Treibmitteln. Bevorzugt wird Wasser als Treibmittel verwendet, insbesondere wird Wasser als alleiniges Treibmittel verwendet.

Für die Herstellung der erfindungsgemäßen Polyurethanschaumstoffe werden üblicherweise Katalysatoren (iv), bevorzugt solche auf Basis von tertiären Aminen, wie beispielsweise Diazabicyclooctan, Triethylamin, oder vorzugsweise Triethylendiamin oder Bis(N,N-Dimethylaminoethyl)ether, verwendet. Die Katalysatoren werden vorzugsweise in einer Menge von 0,01 bis 5 Gew.-%, vorzugsweise 0,05 bis 2 Gew.-%, eingesetzt.

Bei der Herstellung der erfindungsgemäßen Polyurethane werden üblicherweise tertiäre Amine als Katalysatoren verwendet. In diesem Fall beträgt in einer bevorzugten Ausführungsform das Verhältnis von Estergruppen des Oxalsäuredialkylesters (a) zu tertiären Amiongruppen der Komponente (iv) 0,1 : 1 bis 10 :1, bevorzugt von größer als 1 : 1 bis 5 : 1, besonders bevorzugt von 1,1 bis 3 : 1.

Die Erfindung soll durch die nachfolgenden Beispiele veranschaulicht werden.

### Beispiele:

100 Gew.-Teile der A-Komponente und die in Tabelle 1 angegebenen Gew.-Teile der B-Komponente wurden bei 23°C intensiv gemischt und die Mischung in ein auf 50°C temperiertes, plattenförmiges Formwerkzeug aus Aluminium mit den Abmessungen 20cm x 20cm x 1 cm in einer solchen Menge eingebracht, dass nach dem Aufschäumen und Aushärten lassen im geschlossenen Formwerkzeug eine Integralschaumplatte mit einer Gesamtdichte von 550 g/L resultierte.

Aus den so hergestellten Elastomer-Platten wurden nach 24 h Lagerung mit einem Stanzwerkzeug Schulterstäbe als Prüfkörper ausgestanzt. Vor Beginn der Alterungsversuche wurden die Ausgangswerte der Zugfestigkeit nach DIN 53543 bestimmt. Die Probekörper wurden danach einem Alterungstest bei 70°C unter Wasser unterzogen. Die Probennahme erfolgte nach 7 und 14 Tagen. Die Ergebnisse der Tests sind in Tabelle 2 zusammengefasst.
Die Restzugfestigkeit des erfindungsgemäßen Beispiels 1 ist deutlich besser als die Restzugfestigkeiten der Vergleichsbeispiele V1, V2 und V3 insbesondere nach einer Testzeit von 2 Wochen. V4 ist ein System mit geringerer Hydrolysebeständigkeit als V1-V3. Durch Zugabe des erfindungsgemäßen Hydrolyseschutzmittels in Beispiel 2 erhöht sich die Hydrolysebeständigkeit signifikant.

**Tabelle 1**

| | **V1** | **V2** | **V3** | **V4** | **1** | **2** |
|---|---|---|---|---|---|---|
| **Mischungsverhältnis A:B=100:x** | 122 | 128 | 117 | 103 | 123 | 107 |
| **Polyol-Komponente** | | | | | | |
| Polyesterpolyol Lupraphen® 8108 mit Funkt. 2 und OHZ 56 | 88,3 | 88,3 | 88,3 | 89,4 | 88,3 | 86,3 |
| Monoethylenglykol | 9,3 | 9,3 | 9,3 | 8,5 | 9,3 | 8,6 |
| Wasser | 0,47 | 0,47 | 0,47 | 0,38 | 0,47 | 0,39 |
| Lupragen® N202 | 1,76 | 1,76 | 1,76 | 1,60 | 1,76 | 1,62 |
| Dabco® DC 193 | 0,16 | 0,16 | 0,16 | 0,14 | 0,16 | 0,14 |
| Carbodiimid Elastostab® H01 | - | - | 10,0 | - | 10,0 | 3,0 |
| **Isocyanat-Prepolymer** | Iso | Iso | Iso | Iso | Iso | Iso |
| auf Basis von 4,4'-MDI und Lupraphen® 8108 | 187/3 | 187/3 | 187/3 | 187/9 | 187/3 | 187/9 |
| NCO-Gehalt: | 16 | 16 | 16 | 17,5 | 16 | 17,5 |
| Diethyloxalat | - | 2,8 | - | - | 2,8 | 1,0 |

**Tabelle 2**

| | **RTS** | **[%]** |
|---|---|---|
| | **1 w** | **2w** |
| **V1** | 85 | 74 |
| **V2** | 116 | 100 |
| **V3** | 94 | 91 |
| **V4** | 68 | - |
| **1** | 120 | 117 |
| **2** | 100 | 93 |
| RTS = Restzugfestigkeit in % vom Startwert nach 1- (1w) bzw. 2-wöchiger (2w) Alterung. | | |

## Patentansprüche

1. Estergruppen aufweisendes Polykondensationsprodukt, enthaltend ein Mittel, das
a) Oxalsäuredialkylester, wobei der Alkylrest 1 bis 10 Kohlenstoffatome aufweist, und
b) ein Carbodiimid der allgemeinen Formel
Z-N=C=N-Z
aufweist,
wobei Z eine tert.-Butylgruppe, eine Isopropylgruppe oder mit tert.-Butylgruppen, lsopropylgruppen substituierte Arylgruppe darstellt.

2. Estergruppen aufweisendes Polykondensationsprodukt nach Anspruch 1, **dadurch gekennzeichnet, dass** der Oxalsäuredialkylester (a) in einer Menge von 5 bis 80 Gew.-% und das sterisch gehinderte Carbodiimid (b) in einer Menge von 20 bis 95 Gew.-%, bezogen auf das Gesamtgewicht des Mittels, enthalten sind.

3. Estergruppen aufweisendes Polykondensationsprodukt nach Anspruch 1 oder 2, **dadurch gekennzeichnet, dass** der Alkylrest des Oxalsäuredialkylesters (a) aus einem Methylrest oder einem Ethylrest ausgewählt ist.

4. Estergruppen aufweisendes Polykondensationsprodukt nach einem der Ansprüche 1 bis 3, **dadurch gekennzeichnet, dass** als sterisch gehindertes Carbodiimid (b) eine Verbindung gemäß der allgemeinen Formel (1) verwendet wird, 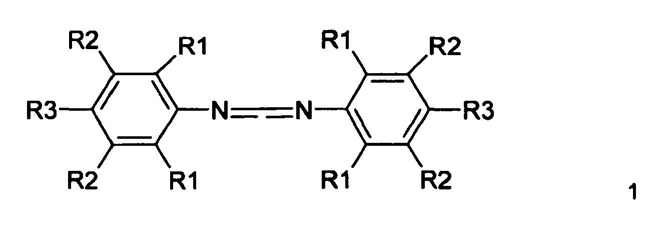 in der R1 eine Isopropyl- oder Isobutylgruppe darstellt und R2 bis R3 ein Wasserstoffatom oder einen organischen Rest darstellt.

5. Estergruppen aufweisendes Polykondensationsprodukt nach Anspruch 4, **dadurch gekennzeichnet, dass** R3 ausgewählt ist aus einem Wasserstoffatom und/oder 1-Methyl-1-Phenyl-ethyl-, ein Phenoxy- oder ein tert.-Butylrest.

6. Estergruppen aufweisendes Polykondensationsprodukt nach einem der Ansprüche 1 bis 3, **dadurch gekennzeichnet, dass** als sterisch gehindertes Carbodiimid (b) eine Verbindung gemäß der allgemeinen Formel (2) verwendet wird, 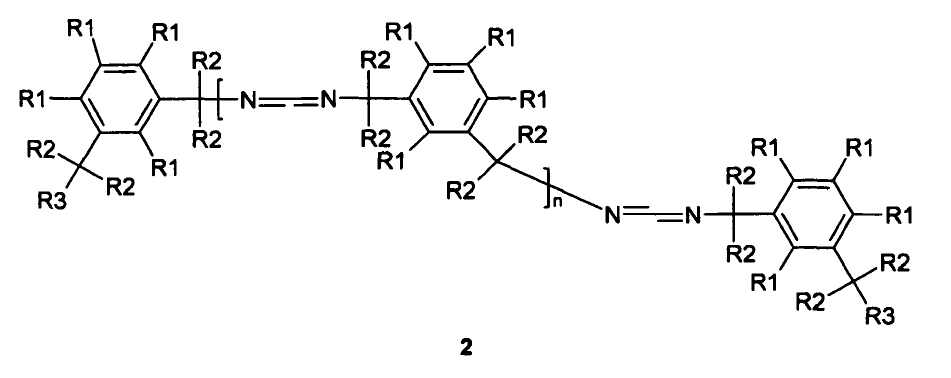
in der R1 gleich oder verschieden ist und einen organischer Rest, bevorzugt ein Wasserstoffatom bedeutet,
R2 gleich oder verschieden ist und einen Alkylrest, bevorzugt eine Methylgruppe bedeutet, und
R3 gleich oder verschieden und ein Wasserstoffatom, ein Alkylrest oder ausgewählt aus der Gruppe der-NCO, -NHCONHR⁴, -NHCONR⁴R⁵ und -NHCOOR⁶-Reste ist, wobei R⁴ und R⁵ gleich oder verschieden sind und einen Alkyl- Cycloalkyl- oder Aralkylrest bedeuten und R⁶ gleich R⁴ oder ein Alkoxypolyoxalkylenrest ist und
n eine ganze Zahl von 0 bis 10 ist.

7. Estergruppen aufweisendes Polykondensationsprodukt nach einem der Ansprüche 1 bis 6, **dadurch gekennzeichnet, dass** es den Oxalsäuredialkylester (a) in einer Menge von 0,1 bis 1 Gew.% und das sterisch gehindertes Carbodiimid (b) in einer Menge von 0,1 bis 10 Gew.-%, bezogen auf das Gesamtgewicht des Polykondensationsprodukts, enthält.

8. Estergruppen aufweisende Polykondensationsprodukt nach Anspruch 7 mit zelligem Kern und kompakter Oberfläche, einer Druckfestigkeit nach DIN 53421 von weniger als 80 kPa und einer Dichte von 150 bis 750 g/l, erhältlich durch Umsetzung von
a) Polyisocyanatprepolymeren mit einem NCO-Gehalt von 10 bis 25 %, erhalten durch Umsetzung von Polyisocyanaten (a1) mit Polyolen (a2), mit
b) Polyolen,
wobei mindestens eine der Komponenten (a2) oder (b) Estergruppen aufweist,
in Gegenwart eines Mittels gemäß einem der Ansprüche 1 bis 6.

## Claims

1. A polycondensation product having ester groups and comprising a composition which comprises
a) dialkyl oxalate, where the alkyl radical has from 1 to 10 carbon atoms, and
b) a carbodiimide of the formula
Z-N = C = N-Z,
where Z is a tert-butyl group or an isopropyl group, or is an aryl group substituted by tert-butyl groups or by isopropyl groups.

2. A polycondensation product having ester groups, according to claim 1, wherein the amount present of the dialkyl oxalate (a) is from 5 to 80% by weight and the amount present of the sterically hindered carbodiimide (b) is from 20 to 95% by weight, based on the total weight of the composition.

3. A polycondensation product having ester groups, according to claim 1 or 2, wherein the alkyl radical of the dialkyl oxalate (a) is a methyl radical or an ethyl radical.

4. A polycondensation product having ester groups, according to any of claims 1 to 3, wherein the sterically hindered carbodiimide (b) used comprises a compound of the formula (1), 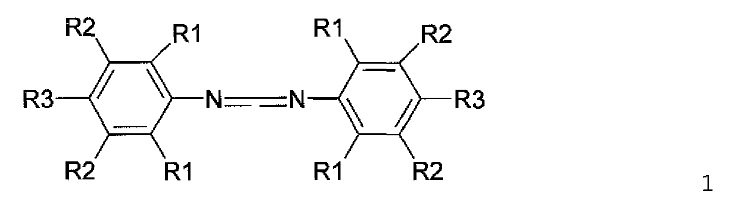 where R1 is an isopropyl or isobutyl group and R2 and R3 are hydrogen atoms or organic radicals.

5. A polycondensation product having ester groups, according to claim 4, wherein R3 is a hydrogen atom and/or 1-methyl-1-phenylethyl, phenoxy, or tert-butyl.

6. A polycondensation product having ester groups, according to any of claims 1 to 3, wherein the sterically hindered carbodiimide (b) comprises a compound of the formula (2), 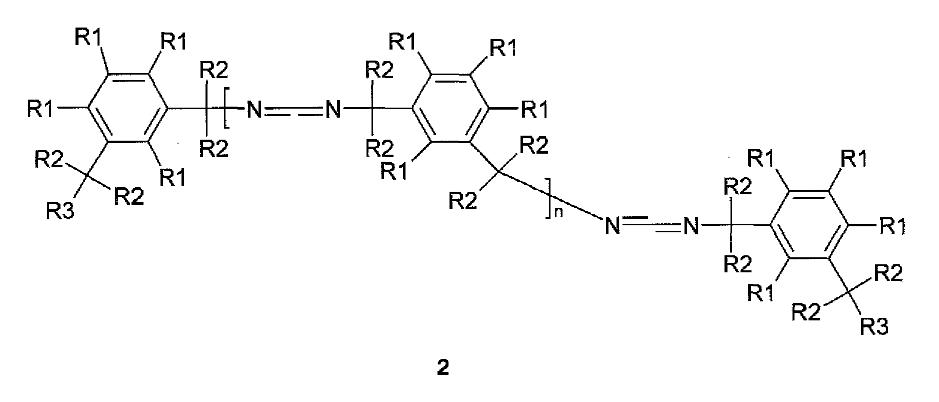
where R1 is identical or different and is an organic radical, or preferably a hydrogen atom,
R2 is identical or different and is an alkyl radical, preferably a methyl group, and
R3 is identical or different and is a hydrogen atom or an alkyl radical, or has been selected from the group of the -NCO, -NHCONHR⁴, -NHCONR⁴R⁵ and - NHCOOR⁶ radicals, where R⁴ and R⁵ are identical or different and are an alkyl, cycloalkyl, or aralkyl radical, and R⁶ is identical with R⁴ or is an alkoxypolyoxalkylene radical, and
n is a whole number from 0 to 10.

7. A polycondensation product having ester groups, according to any of claims 1 to 6, which comprises an amount of from 0.1 to 1% by weight of the dialkyl oxalate (a) and an amount of from 0.1 to 10% by weight of the sterically hindered carbodiimide (b), based on the total weight of the polycondensation product.

8. A polycondensation product having ester groups, according to claim 7 with cellular core and compact surface, with a compressive strength to DIN 53421 of less than 80 kPa and with a density of from 150 to 750 g/l, obtainable by reacting
a) polyisocyanate prepolymers having an NCO content of from 10 to 25%, obtained by reacting polyisocyanates (a1) with polyols (a2), with
b) polyols,
where at least one of the components (a2) or (b) has ester groups,
in the presence of a composition according to any of claims 1 to 6.

## Revendications

1. Produit de polycondensation comprenant des groupes ester, contenant un agent qui comprend :
a) un ester dialkylique de l'acide oxalique, le radical alkyle comprenant 1 à 10 atomes de carbone, et
b) un carbodiimide de formule générale
Z-N=C=N-Z
dans laquelle Z représente un groupe tert.-butyle, un groupe isopropyle ou un groupe aryle substitué avec des groupes tert.-butyle, des groupes isopropyle.

2. Produit de polycondensation comprenant des groupes ester selon la revendication 1, **caractérisé en ce que** l'ester dialkylique de l'acide oxalique (a) est contenu en une quantité de 5 à 80 % en poids et le carbodiimide à encombrement stérique (b) en une quantité de 20 à 95 % en poids, par rapport au poids total de l'agent.

3. Produit de polycondensation comprenant des groupes ester selon la revendication 1 ou 2, **caractérisé en ce que** le radical alkyle de l'ester dialkylique de l'acide oxalique (a) est choisi parmi un radical méthyle ou un radical éthyle.

4. Produit de polycondensation comprenant des groupes ester selon l'une quelconque des revendications 1 à 3, **caractérisé en ce qu'**un composé de formule générale (1) est utilisé en tant que carbodiimide à encombrement stérique (b) 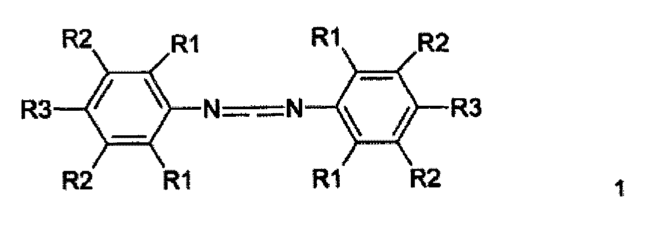 dans laquelle R1 représente un groupe isopropyle ou isobutyle et R2 à R3 représentent un atome d'hydrogène ou un radical organique.

5. Produit de polycondensation comprenant des groupes ester selon la revendication 4, **caractérisé en ce que** R3 est choisi parmi un atome d'hydrogène et/ou un radical 1-méthyl-1-phényl-éthyle, phénoxy ou tert.butyle.

6. Produit de polycondensation comprenant des groupes ester selon l'une quelconque des revendications 1 à 3, **caractérisé en ce qu'**un composé de formule générale (2) est utilisé en tant que carbodiimide à encombrement stérique (b) 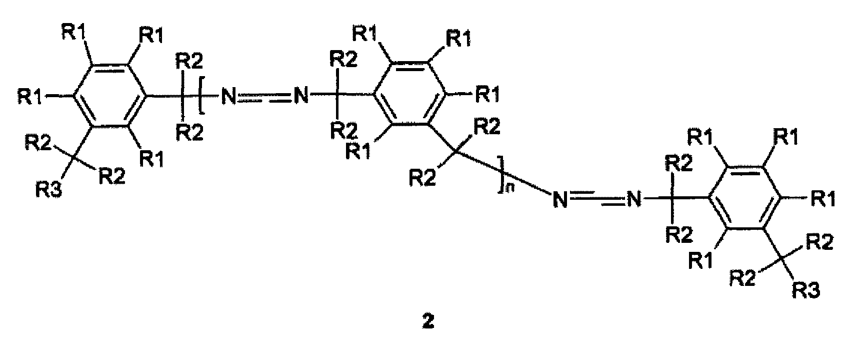
dans laquelle les R1 sont identiques ou différents et signifient un radical organique, de préférence un atome d'hydrogène,
les R2 sont identiques ou différents et signifient un radical alkyle, de préférence un groupe méthyle, et
les R3 sont identiques ou différents et signifient un atome d'hydrogène, un radical alkyle ou sont choisis dans le groupe des radicaux -NCO, -NHCONHR⁴, -NHCONR⁴R⁵ et -NHCOOR⁶, R⁴ et R⁵ étant identiques ou différents et signifiant un radical alkyle, cycloalkyle ou aralkyle, et R⁶ étant identique à R⁴ ou signifiant un radical alcoxypolyoxyalkylène, et
n est un nombre entier de 0 à 10.

7. Produit de polycondensation comprenant des groupes ester selon l'une quelconque des revendications 1 à 6, **caractérisé en ce qu'**il contient l'ester dialkylique de l'acide oxalique (a) en une quantité de 0,1 à 1 % en poids et le carbodiimide à encombrement stérique (b) en une quantité de 0,1 à 10 % en poids, par rapport au poids total du produit de polycondensation.

8. Produit de polycondensation comprenant des groupes ester selon la revendication 7, ayant un noyau cellulaire et une surface compacte, une résistance à la compression selon DIN 53421 inférieure à 80 kPa et une densité de 150 à 750 g/l, pouvant être obtenu par mise en réaction de :
a) des prépolymères de polyisocyanate ayant une teneur en NCO de 10 à 25 %, obtenus par réaction de polyisocyanates (a1) avec des polyols (a2), avec
b) des polyols,
au moins un des composants (a2) ou (b) comprenant des groupes ester,
en présence d'un agent selon l'une quelconque des revendications 1 à 6.
